# EUROPÄISCHE PATENTSCHRIFT

(11) **EP 0 530 466 B1**
(45) Veröffentlichungstag und Bekanntmachung des Hinweises auf die Patenterteilung: **07.02.1996**
(21) Anmeldenummer: 92111665.3
(22) Anmeldetag: 09.07.1992
(51) Int. Cl.: F16H 3/36, F16H 63/22

(54) **Gangschaltung eines Kraftfahrzeuggetriebes**
Gear shift device for a vehicle transmission
Changement de vitesse de boîte de vitesse

(30) Priorität: 16.08.1991 DE 4127098
(43) Veröffentlichungstag der Anmeldung: 10.03.1993
(73) Patentinhaber: Dr.Ing.h.c. F. Porsche Aktiengesellschaft, D-70435 Stuttgart (DE)
(72) Erfinder: Knape, Dieter, W-7100 Heilbronn (DE)

(56) Entgegenhaltungen:
- EP-A- 0 131 720
- EP-A- 0 395 241
- WO-A-86/00967
- DE-A- 2 317 725
- DE-U- 1 731 865
- FR-A- 2 571 667
- PATENT ABSTRACTS OF JAPAN Vol, no. 454 (M-1031) 28 September 1990 & JP-A-21 80 381 ( SUZUKI ) 13 Juli 1990

## Beschreibung

Die Erfindung betrifft eine Gangschaltung eines Kraftfahrzeuggetriebes nach dem Oberbegriff des Anspruchs 1.

Aus DE-OS 33 14 411 ist eine Gangschaltung bekannt, bei der durch Längsverschieben eines von der Schaltwelle betätigten Umlenkhebels die Getriebegänge vorwählbar, durch Drehen des Umlenkhebels schaltbar sind. Zum Schalten der Getriebegänge verschiebt der Umlenkhebel die Schaltstangen, an denen jeweils Schaltgabeln befestigt sind, die in Synchronisierkupplungen der Getriebegänge eingreifen. Für ein Fünfgang-Getriebe mit Rückwärtsgang sind mindestens drei Schaltstangen erforderlich, die im Getriebegehäuse längsverschiebbar gelagert sind.

Aus der EP-A-0 131 720 ist eine gattungsgemäße Gangschaltung mit einer Schaltwelle bekannt, durch deren Drehen die Getriebegänge nacheinander vorwählbar und durch deren Längsverschiebung schaltbar sind. Diese ist mit einem Sperrelement gekoppelt, das in ihrer Längsrichtung arretiert ist und mit ihr in Drehverbindung steht. Durch dieses Sperrelement werden die nicht zu schaltenden Getriebegänge verriegelt. Dazu ist in der Schaltwelle eine in Achsrichtung durchgehende Nut eingearbeitet, in die ein Schieber eingreift. Durch das Zusammenwirken des Schiebers und der durchgehenden Nut kann es dem Betrieb der Gangschaltung bei engen Toleranzen zu erheblichen Reibungsverlusten kommen. Andererseits ist bei größeren Toleranzen mit einer Verringerung der Reibung zu rechnen, dies führt jedoch zu erheblichem Spiel und kann insbesondere bei längeren Betriebsdauern zu einer hakeligen Schaltung führen.

Es ist demgegenüber die Aufgabe der Erfindung, die Herstellkosten einer Gangschaltung zu senken, eine einfach aufgebaute Sperreinrichtung für die nicht zu schaltenden Getriebegänge zu schalten und die Reibung beim Vorwählen und Schalten der Getriebegänge zu vermindern.

Zur Lösung dieser Aufgabe dienen die kennzeichnenden Merkmale des Anspruchs 1. Wenn die Getriebegänge durch Drehen und Längsverschieben einer Schaltwelle direkt vorwählbar und schaltbar sind, sind Schaltstangen entbehrlich. Die Einsparung der Schaltstangen erbringt neben einer Senkung der Herstellkosten auch eine Verminderung der Reibung bei der Gangbetätigung. Zur Arretierung der nicht zu schaltenden Getriebegänge dient eine zur Schaltwelle parallele Sperrwelle, die beim Vorwählen der Gänge von der Schaltwelle mitgedreht wird. Die bei der Drehbewegung auftretende Reibung ist sehr gering, insbesondere ist sie weit geringer als die Gleitreibung beim Längsverschieben von Schaltstangen.

Ein Ausführungsbeispiel der Erfindung ist in der Zeichnung dargestellt und wird nachfolgend erläutert.

Es zeigen:

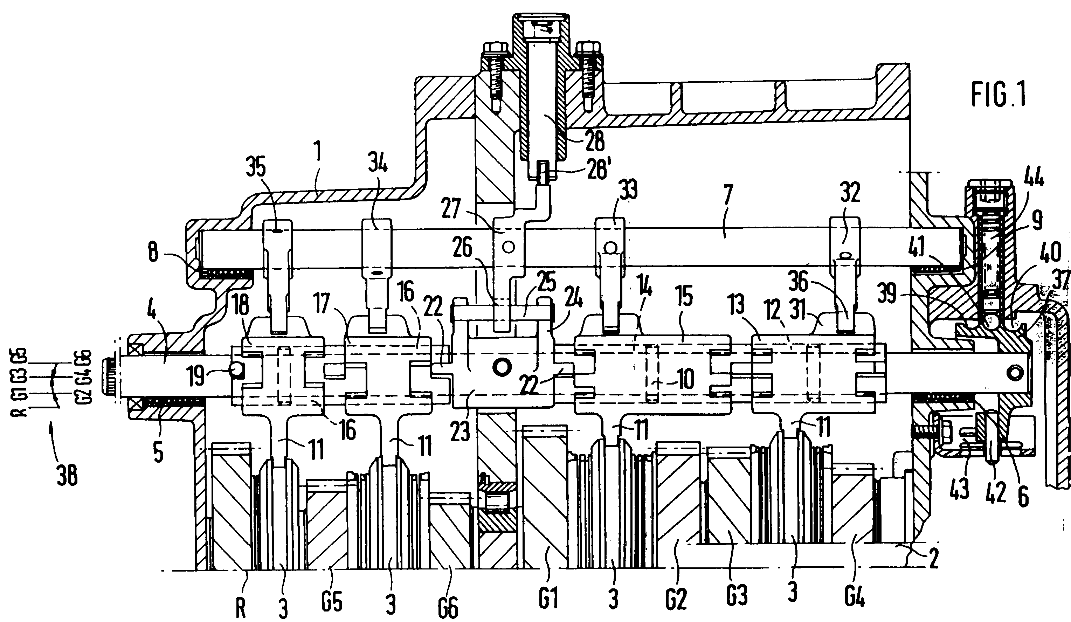

- Fig. 1: Längsschnitt einer Gangschaltung für ein Sechsgang-Getriebe,
- Fig. 2: Verriegelungslage bei Vorwahl der Gänge G3/G4,
- Fig. 3: Verriegelungslage bei Vorwahl der Gänge G3/G4 für G5/G6,
- Fig. 4: Verriegelungslage bei Vorwahl der Gänge für G1/G2,
- Fig. 5: Verriegelungslage bei Vorwahl der Gänge für R-Gang,
- Fig. 6: Querschnitt einer Schaltwellensperre,
- Fig. 7: Querschnitt einer Vorwählsperre an einer Sperrwelle.

In einem Getriebegehäuse 1 sind auf einer Welle 2 die Losräder des vierten Ganges G4, des dritten Ganges G3, des zweiten Ganges G2, des ersten Ganges G1, des sechsten Ganges G6, des fünften Ganges G5 sowie des Rückwärtsganges R in dieser Reihenfolge gelagert. Die Losräder sind jeweils mittels Synchronisierkupplungen 3 mit der Welle 2 drehmomentübertragend verbindbar. Parallel zur Welle 2 ist im Getriebegehäuse 1 eine Schaltwelle 4 in Nadellagern 5 und 6 längs- und drehbeweglich gelagert. Zur Schaltwelle 4 parallel liegend ist eine Sperrwelle 7 in Nadellagern 8 und 9 des Getriebegehäuses 1 drehbar gelagert; in Achsrichtung ist sie unter Freilassung eines geringen Luftspaltes von ca. 1 mm beidseits am Getriebegehäuse 1 arretiert.

Durch Drehen der Schaltwelle 4 werden die Getriebegänge vorgewählt, durch Längsverschieben geschaltet. Hierzu sind auf der Schaltwelle 4 mehrere Schalthülsen mit Stiften 10 befestigt. Sie wirken mit Gabelhülsen zusammen, die auf ihnen drehbar gelagert sind und mit Schaltgabeln 11 zur Betätigung der Synchronisierkupplungen 3 versehen sind. Zum Vorwählen und Schalten der Gänge G3, G4 ist ihnen eine Schalthülse 12 und eine Gabelhülse 13, der Gänge G1, G2 eine Schalthülse 14 und eine Gabelhülse 15, der Gänge G5, G6 eine Schalthülse 16 und eine Gabelhülse 17, zur Betätigung des R-Ganges dieselbe Schalthülse 16, eine Gabelhülse 18 und ein in der Schaltwelle 4 befestigter Stift 19 zugeordnet. Der Stift 19 dient lediglich zum Ausrücken des R-Ganges.

An den Schalthülsen sind radial vorstehende Klauen 20 angebracht. Zum Schalten eines Getriebeganges liegen die Klauen 20 an der Stirnfläche der dem Getriebegang zugeordneten Gabelhülse an. Durch Längsverschieben der Schaltwelle 4 läßt sich dieser Getriebegang schalten. Die übrigen Klauen 20 tauchen dabei berührungsfrei in Ringaussparungen 21 der anderen Gabelhülsen ein, so daß diese Gabelhülsen ortsfest verbleiben.

Um den dritten Gang G3 schalten zu können, wird die Schaltwelle zunächst in eine solche Vorwählstellung gedreht, daß die Klaue 20 der Schalthülse 12 an der rechten Stirnfläche der Gabelhülse 13 anliegt. Durch Verschieben der Schaltwelle 4 nach links wird G3 geschaltet. In der gleichen Vorwählstellung läßt sich mit der an der linken Stirnfläche der Gabelhülse 13 anliegenden Klaue der benachbarten Schalthülse 14 der vierte Gang G4 durch Verschieben der Schaltwelle 4 nach rechts schalten.

In ähnlicher Weise lassen sich auch die anderen Gänge schalten. Die Gänge G2 und G5 werden mit axial vorstehenden Klauen 22 einer auf der Schaltwelle 4 verstifteten Mitnehmerbuchse 23 geschaltet.

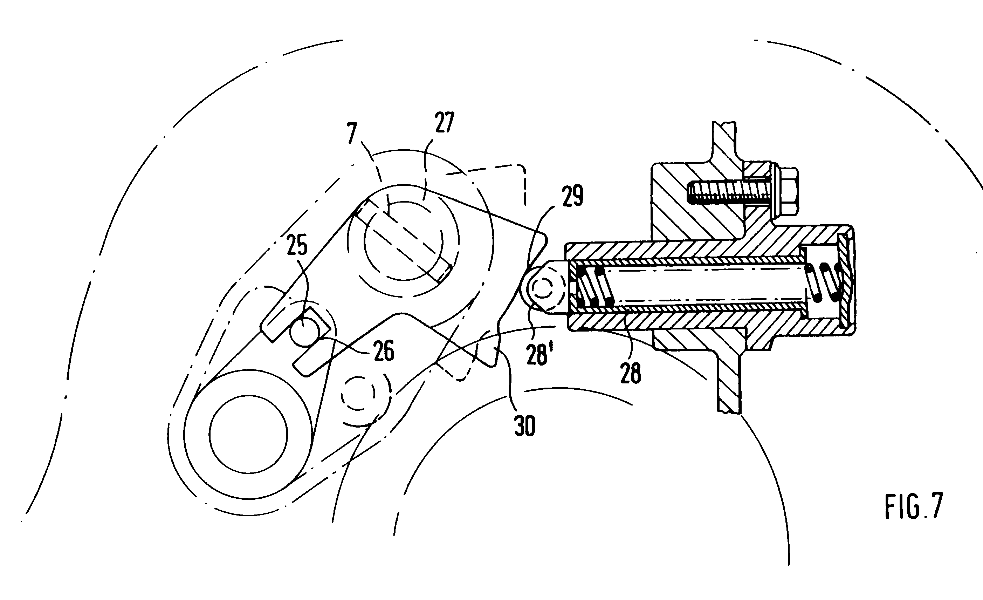

Die Mitnehmerbuchse 23 dient auch dazu, die Drehbewegung der Schaltwelle 4 auf die Sperrwelle 7 zu übertragen. In Laschen 24 der Mitnehmerbuchse 23 ist ein Mitnehmerstift 25 zur Schaltwelle 4 parallel liegend befestigt. Er greift in eine Kulissenführung 26 einer mit der Sperrwelle 7 verstifteten Winkellasche 27 ein. Am einen Schenkel weist die Winkellasche 27 die Kulissenführung 26, am andern Schenkel ein mit einem Federstift 28 und einer Rolle 28' zusammenwirkendes Rampenprofil auf. Diese in Fig. 7 dargestellte Vorwählsperre dient dazu, das Vorwählen von Getriebegängen spürbar zu erschweren. Beim Vorwählen der Gänge G5, G6 gleitet der durch eine Feder belastete Federstift 28 an einer sanft ansteigenden Rampe 29 entlang. In der anderen extremen Drehlage der Winkellasche 27 ist der R-Gang über eine steil ansteigende Rampe 30 erreichbar.

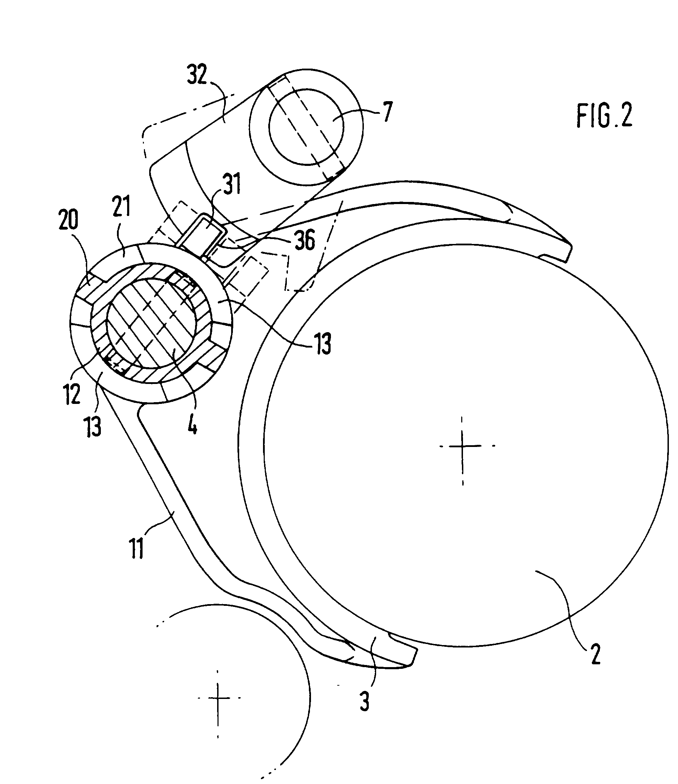

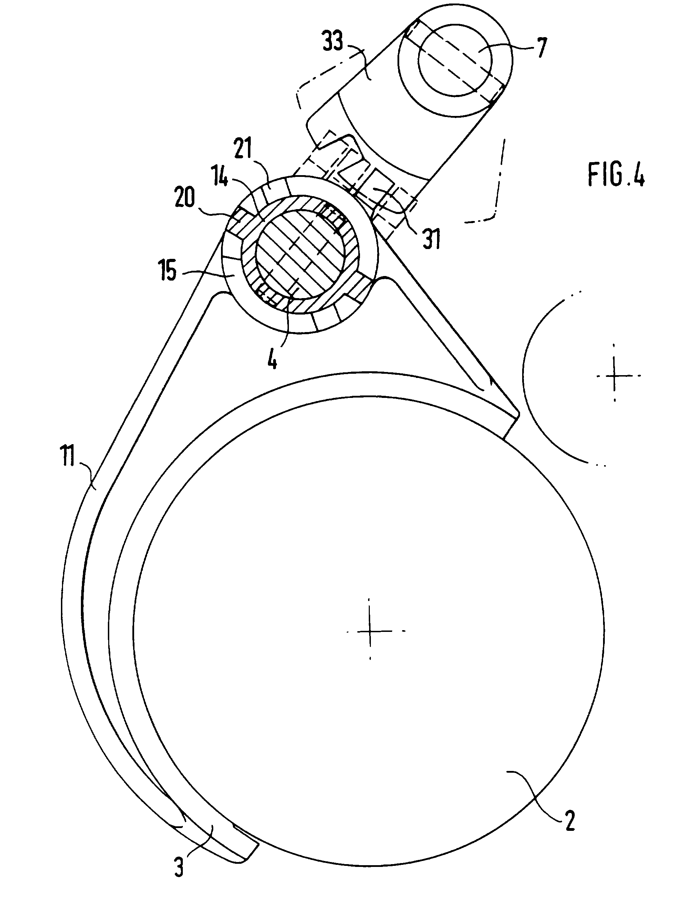

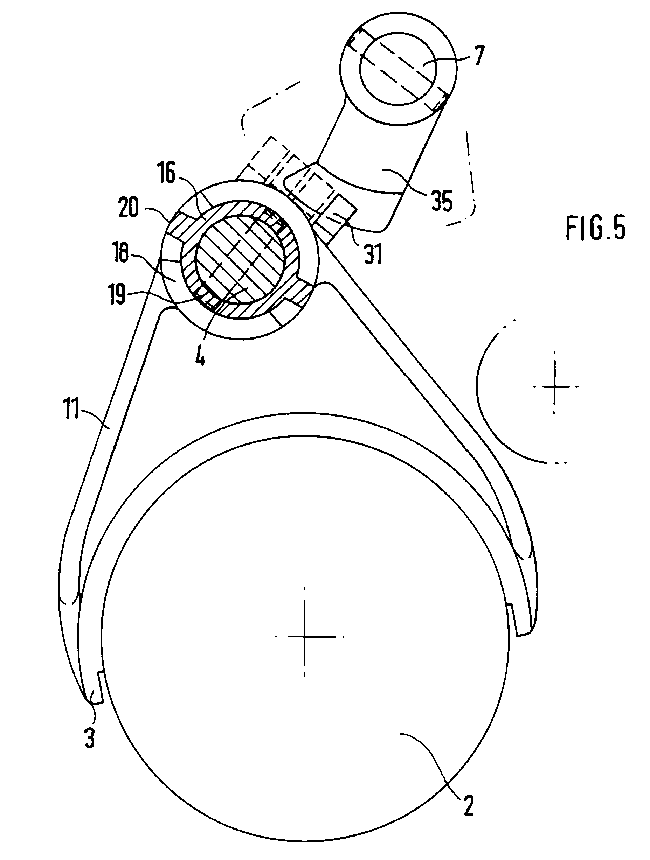

Um zu erreichen, daß beim Betätigen einer Schaltgabel die übrigen Schaltgabeln nicht betätigt werden, ist eine Verriegelungsvorrichtung vorgesehen, wie sie in den Fig.2 bis 5 in verschiedenen Stellungen dargestellt ist. An allen Gabelhülsen sind radial vorstehende Nasen 31 angebracht. Sie wirken mit Sperrteilen zusammen, die mit der Sperrwelle 7 verstiftet sind. Der Gabelhülse 13 der Gänge G3/G4 ist ein Sperrteil 32, der Gabelhülse 15 für G1/G2 ein Sperrteil 33, der Gabelhülse 17 für G5/G6 ein Sperrteil 34, der Gabelhülse 18 des R-Ganges ein Sperrteil 35 zugeordnet.

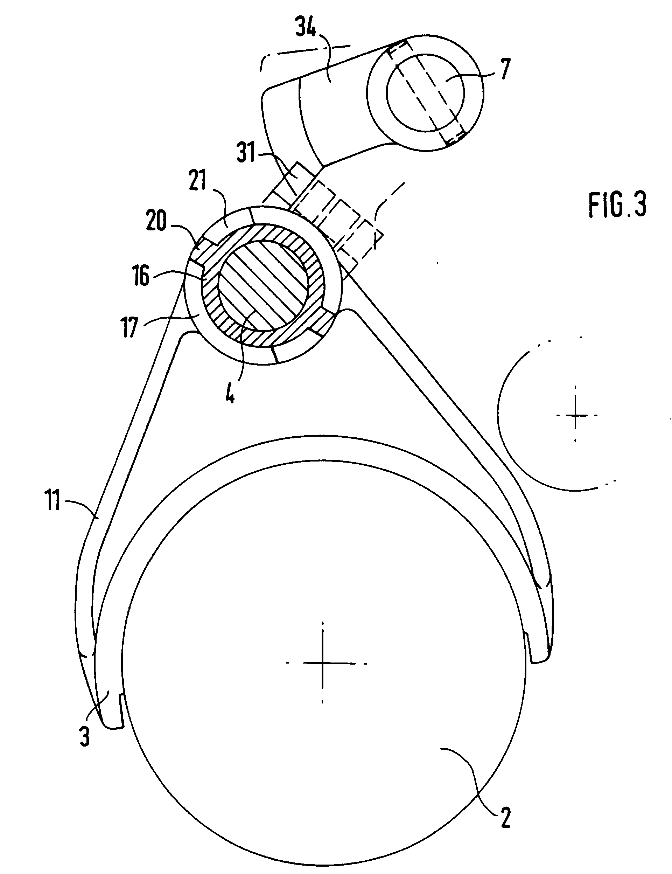

Die Fig. 2 bis 5 zeigen eine Lage der Gangschaltung, bei der die Gänge G3 und G4 schaltbar, alle übrigen Gänge verriegelt sind. In Fig. 2 steht die Nase 31 der Schalthülse 12 vor einer in Achsrichtung durchgehenden Nut 36 des Sperrteils 32. Beim Schalten der Gänge G3 und G4 läßt sich die Nase 31 der Gabelhülse 13 berührungsfrei durch die Nut 36 hindurchführen. Wie die Fig. 3 bis 5 zeigen, werden die Nasen 31 der anderen Gabelhülsen 15, 17, 18 an ihren Sperrteilen 33, 34, 35 in Anlage gehalten. Die Verriegelung beim Schalten eines anderen Ganges geschieht in ähnlicher Weise. Ist z.B. die Schaltgasse G5/G6 vorgewählt, so läuft beim Schalten von G5 oder G6 die Nase der Gabelhülse 17 ungehindert seitlich am Sperrteil 34 vorbei. Die Nasen 31 der anderen Gabelhülsen liegen an ihren Sperrteilen an.

Eine Schaltrastierung an der Schaltwelle 4 bewirkt, daß der jeweils eingelegte Gang festgehalten und nur entgegen Federkraft geändert werden kann. Mit der Schaltwelle 4 ist an ihrem rechten Ende ein Rastsegment 37 befestigt, mit dessen drei Ringnuten eine Federraste 44 zusammenwirkt. Wie aus dem Schaltbild 38 ersichtlich ist, dient die linke Ringnut 39 zum Festhalten der Gänge G5, G3, G1 und R, die rechte Ringnut 40 als Gangschaltung für G2, G4 und G6. Die mittlere Ringnut 41 markiert die neutrale, ungeschaltete Null-Lage.

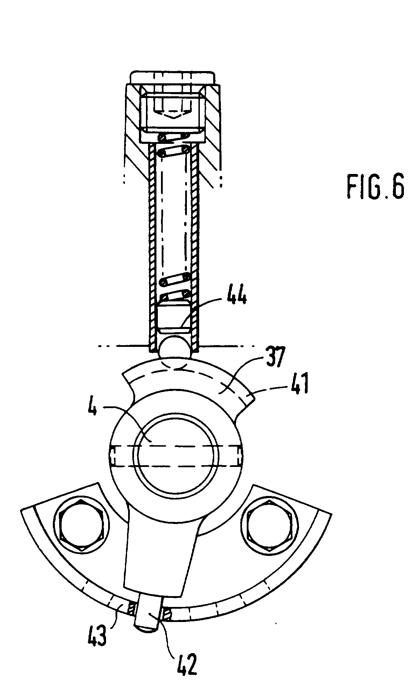

Wie Fig. 6 zeigt, ist am Rastsegment 37 diametral gegenüberliegend zu der mittleren Ringnut 41 ein Raststift 42 eingepreßt, der in einer gehäusefesten Kulissensperre 43 entlang geführt ist. Die Kulissensperre 43 hat in der Draufsicht gesehen dieselbe Gestalt wie das Schaltbild 38. Sie setzt der Bewegungsmöglichkeit der Schaltwelle 4 enge Toleranzen, so daß eine äußerst präzise Gangschaltung realisierbar ist.

## Patentansprüche

1. Gangschaltung eines Kraftfahrzeuggetriebes mit einer Schaltwelle, durch deren Drehen die Getriebegänge nacheinander vorwählbar und durch deren Längsverschieben schaltbar sind, wobei ein mit ihr in Drehverbindung stehendes, in ihrer Längsrichtung arretiertes Sperrelement vorgesehen ist, mit dem die nicht zu schaltenden Getriebegänge verriegelbar sind, dadurch gekennzeichnet, daß das Sperrelement eine parallel zur Schaltwelle (4) gelagerte Sperrwelle (7) ist.

2. Gangschaltung nach Anspruch 1, **dadurch gekennzeichnet,** daß zur Übertragung der Drehbewegung ein Mitnehmerstift (25) der Schaltwelle (4) in einer Kulissenführung (26) der Sperrwelle (7) längsgeführt ist.

3. Gangschaltung nach Anspruch 1, **dadurch gekennzeichnet,** daß auf der Schaltwelle (4) Schalthülsen (12, 14, 16) befestigt sind und auf ihnen Gabelhülsen (13, 15, 17) drehbar gelagert sind, an denen die in die Synchronisierkupplungen (3) der Getriebegänge eingreifenden Schaltgabeln (11) angebracht sind, wobei zum Schalten der Getriebegänge radial vorstehende Klauen (20) der Schalthülsen (12, 14, 16) an den Stirnseiten der Gabelhülsen (13, 15, 17) anliegen und die Klauen (20) in Ringaussparungen (21) der nicht zu betätigenden Gabelhülsen berührungsfrei eintauchen.

4. Gangschaltung nach Anspruch 1, **dadurch gekennzeichnet,** daß die Längsbewegung der Gabelhülsen (13, 15, 17, 18) durch Sperrteile (33, 34, 35) verrastbar ist, die auf der Sperrwelle (7) befestigt und mit ihr entsprechend der Vorwählstellung drehbar sind.

5. Gangschaltung nach Anspruch 4, **dadurch gekennzeichnet,** daß an den Gabelhülsen (13, 15, 17, 18) radial vorstehende Nasen (31) angebracht sind, wobei die Nase (31) der zu betätigenden Gabelhülse berührungsfrei in eine axial durchgehende Nut (36) ihres Sperrteils eintaucht und die Nasen (31) der nicht zu betätigenden Gabelhülsen stirnseitig an ihren Sperrteilen anliegen.

6. Gangschaltung nach Anspruch 2, **dadurch gekennzeichnet,** daß die Kulissenführung (26) an einem Schenkel einer auf der Sperrwelle (7) befestigten Winkellasche (27)angebracht ist, wobei der andere Schenkel als Vorwählsperre ein Rampenprofil (29, 30) aufweist, an dem ein Federstift (28) anliegt.

7. Gangschaltung nach Anspruch 6, **dadurch gekennzeichnet**, daß die Vorwahl der Gänge G5 und G6 durch eine flache Rampe (29), die Vorwahl des R-Ganges durch eine steile Rampe (30) erschwert ist.

8. Gangschaltung nach Anspruch 1, **dadurch gekennzeichnet**, daß die Längsbewegung der Schaltwelle (4) in drei Stellungen durch eine Federraste (44) verrastbar ist, die Schaltbewegung der Schaltwelle durch eine ortsfeste Kulissensperre (43) eng toleriert ist, wobei die Formgebung der Kulissensperre (43) dem Schaltbild (38) der Gangschaltung entspricht.

## Claims

1. A gear-shift device of a motor-vehicle transmission, with a gear-shift shaft, the gears being pre-selectable in succession by the rotation of the said gear-shift shaft and being engageable by the longitudinal displacement of the said gear-shift shaft, wherein a locking member is provided which is rotationally connected to the said gear-shift shaft and locked in the longitudinal direction thereof and by which the gears not to be shifted are lockable, **characterized in that** the locking member is a locking shaft (7) mounted parallel to the gear-shift shaft (4).

2. A gear-shift device according to Claim 1, **characterized in that** an entrainment pin (25) of the gear-shift shaft (4) is guided longitudinally in a slide block (26) in the locking shaft (7) in order to transmit rotary movement.

3. A gear-shift device according to Claim 1, **characterized in that** gear-shift sleeves (12, 14, 16) are secured to the gear-shift shaft (4) and fork sleeves (13, 15, 17) are mounted rotatably thereon, wherein the gear-shift forks (11) engaging in the synchronizing couplings (3) of the gears are attached to the fork sleeves (13, 15, 17), and, in order to shift the gears, radially projecting claws (20) of the gear-shift sleeves (12, 14, 16) rest on the front faces of the fork sleeves (13, 15, 17), and the claws (20) project without contact into annular recesses (21) of the fork sleeves which are not to be actuated.

4. A gear-shift device according to Claim 1, **characterized in that** the longitudinal movement of the fork sleeves (13, 15, 17, 18) is engageable by locking parts (33, 34, 35) secured to the locking shaft (7) and rotatable therewith in accordance with the pre-selection setting.

5. A gear-shift device according to Claim 4, **characterized in that** radially projecting protuberances (31) are attached to the fork sleeves (13, 15, 17, 18), wherein the protuberance (31) of the fork sleeve to be actuated projects without contact into an axially extending groove (36) in the locking part thereof and the protuberances (31) of the fork sleeves which are not to be actuated rest on the front ends of their locking parts.

6. A gear-shift device according to Claim 2, **characterized in that** the slide block (26) is mounted on one arm of an angled plate (27) secured to the locking shaft (7), wherein the other arm is provided with a ramp profile (29, 30) as a pre-selection lock, against which a spring-loaded pin (28) rests.

7. A gear-shift device according to Claim 6, **characterized in that** the pre-selection of the gears **G5** and **G6** is impeded by a flat ramp (29), and the pre-selection of the reverse gear by a steep ramp (30).

8. A gear-shift device according to Claim 1, **characterized in that** the longitudinal movement of the gear-shift shaft (4) is engageable in three settings by a spring-loaded catch (44), and the shifting movement of the gear-shift shaft is closely limited by a stationary slide-block lock (43), wherein the shape of the slide-block lock (43) corresponds to the pattern (38) of the gear shifting.

## Revendications

1. Changement de vitesse d'une boîte de vitesses d'un véhicule automobile comportant un arbre de commutation dont la rotation permet de présélectionner les rapports de la boîte l'un après l'autre et dont le coulissement longitudinal permet leur commutation, dans lequel il est prévu un élément de blocage en liaison de rotation avec celui-ci, bloqué dans sa direction longitudinale, permettant de verrouiller les rapports qui ne sont pas à commuter, caractérisé en ce que l'élément de blocage est un arbre de blocage (7) monté parallèlement à l'arbre de commutation (4).

2. Changement de vitesse selon la revendication 1, caractérisé en ce que pour la transmission du mouvement de rotation, un doigt entraîneur (25) de l'arbre de commutation (4) est guidé longitudinalement dans un guidage à coulisse (26) de l'arbre de blocage (7).

3. Changement de vitesse selon la revendication 1, caractérisé en ce que sur l'arbre de commutation (4) sont fixés des manchons de commutation (12, 14, 16) et sur ceux-ci sont montés tournants des manchons de fourche (13, 15, 17), sur lesquels sont fixées les fourches de commutation (11) s'engageant dans les accouplements de synchronisation (3) des rapports de la boîte de vitesses, des griffes (20) faisant saillie radialement des manchons de commutation (12, 14, 16) s'appliquant contre les côtés frontaux des manchons de fourche (13, 15, 17), en vue de la commutation des rapports, et les griffes (20) pénétrant sans contact dans des découpes annulaires (21) des manchons de fourche qui ne sont pas à actionner.

4. Changement de vitesse selon la revendication 1, caractérisé en ce que le déplacement longitudinal des manchons de fourche (13, 15, 17, 18) peut être accroché par des éléments de blocage (33, 34, 35), qui sont fixés sur l'arbre de blocage (17) et qui peuvent tourner avec celui-ci suivant la position de présélection.

5. Changement de vitesse selon la revendication 4, caractérisé en ce que sur les manchons de fourche (13, 15, 17, 18) sont fixés des ergots (31) faisant saillie radialement, l'ergot (31) du manchon de fourche à actionner pénétrant sans contact dans une rainure (36) axialement continue de son élément de blocage et les ergots (31) des manchons de fourche qui ne doivent pas être actionnés s'appliquant frontalement contre leurs éléments de blocage.

6. Changement de vitesse selon la revendication 2, caractérisé en ce que le guidage à coulisse (26) est fixé sur une branche d'une éclisse à cornière (27) fixée sur l'arbre de blocage (7), l'autre branche présentant en tant que blocage de présélection un profil en rampe (29, 30), contre lequel s'applique une tige à ressort (28).

7. Changement de vitesse selon la revendication 6, caractérisé en ce que la présélection des rapports G5 et G6 est rendue plus difficile par une rampe plate (29), la présélection de la marche arrière par une rampe raide (30).

8. Changement de vitesse selon la revendication 1, caractérisé en ce que le déplacement longitudinal de l'arbre de commutation (4) peut s'accrocher dans trois positions au moyen d'un cran d'arrêt à ressort (44), le mouvement de commutation de l'arbre de commutation est soumis à des tolérances étroites par un blocage à coulisse (43) fixe, la forme du blocage à coulisse (43) correspondant au schéma de commutation (38) du changement de vitesse.
